# EUROPEAN PATENT APPLICATION

(11) **EP 4 836 367 A1**
(43) Date of publication of application: **04.11.2026**
(21) Application number: 24915232.3
(22) Date of filing: 30.12.2024
(51) Int. Cl.: H04L 41/0894

(54) **NETWORK POLICY MANAGEMENT METHOD AND APPARATUS, AND DEVICE AND STORAGE MEDIUM**

(30) Priority: 02.01.2024 CN 202410006798
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DENG, Lingli, Beijing 100053 (CN); FENG, Chengcheng, Beijing 100053 (CN)
(74) Representative: Novagraaf Technologies
(86) International application number: PCT/CN2024/143760
(87) International publication number: WO 2025/146018

(57) **Abstract**

Disclosed in the present application are a network policy management method and apparatus, and a device and a storage medium. The method comprises: acquiring at least one target policy instance for network management; on the basis of policy application knowledge, performing policy relationship analysis on the at least one target policy instance and an existing policy instance, so as to S obtain a policy relationship analysis result; and on the basis of the policy relationship analysis result, performing optimization processing on the at least one target policy instance and the existing policy instance. The method can realize systematic management of network policies, can satisfy hierarchical and cross-field systematic universal management of operation and maintenance management policies for various network fields, and has the advantages of strong universality, high levels of flexibility and on-demand expandability.

## Description

### CROSS-REFERENCE TO RELATED APPLICATION

This application is based on and claims priority to Chinese Patent Application No. 202410006798.4, filed on January 02, 2024, the entire content of which is incorporated herein by reference.

### TECHNICAL FIELD

The present disclosure relates to the field of policy management, and in particular, to a method and apparatus for network policy management, a device, and a storage medium.

### BACKGROUND

"Autonomous Networks" emerged in response to the development of a digital and intelligent society. Through the digital and intelligent transformation and upgrading of network operations and maintenance (O&M) itself, it meets the higher requirements of digital and intelligent products for network experience and agile support, driving information services to a new level. The "Autonomous Network" aims to build automated and intelligent O&M capabilities for the entire lifecycle of a network, providing consumers and vertical industry customers with new network and Information and Communications Technology (ICT) services featuring "zero wait, zero touch, zero trouble", and creating "self-configuring, self-healing, self-optimizing" digital and intelligent O&M capabilities for smart network O&M.

In the related art, solutions combining knowledge-driven approaches with network O&M policy management often simply combine specific expression methods of network information graphs and domain-specific policies with business logic. These methods lack universality and cannot meet the requirements for multi-level, multi-domain flexible application and scalability of systematic management of autonomous network policies.

### SUMMARY

In view of this, embodiments of the present disclosure provide a method and apparatus for network policy management, a device, and a storage medium, aiming to meet the requirements for systematic management of network policies.

The technical solutions of the embodiments of the present disclosure are implemented as follows:
In a first aspect, an embodiment of the present disclosure provides a method for network policy management, comprising:
obtaining at least one target policy instance for network management;
performing policy relationship analysis on the at least one target policy instance and an existing policy instance based on policy application knowledge to obtain a policy relationship analysis result; and
performing optimization processing on the at least one target policy instance and the existing policy instance based on the policy relationship analysis result.

In the above solution, obtaining the at least one target policy instance for network management includes at least one of the following:
obtaining at least one externally imported target policy instance; or
obtaining at least one internally monitored target policy instance.

In the above solution, the method further includes:
constructing the policy application knowledge based on policy instance knowledge and/or network management object instance knowledge.

In the above solution, the policy application knowledge includes at least one of the following: object instance knowledge, policy instance knowledge, or element instance knowledge. The object instance knowledge is used to represent an object instance, the policy instance knowledge is used to represent a policy instance, and the element instance knowledge is used to represent an element instance. The performing policy relationship analysis on the at least one target policy instance and an existing policy instance based on policy application knowledge to obtain a policy relationship analysis result includes:
verifying the policy validity of the at least one target policy instance based on the policy instance knowledge to obtain a policy instance set in which policies are valid; and/or,
performing a scope of effect analysis on the policy instance set in which policies are valid and an existing policy instance based on the object instance knowledge to obtain a policy instance set in which policies are valid and have intersecting scopes of effect; and/or,
performing an effectiveness relationship analysis on the policy instance set in which policies are valid and have intersecting scopes of effect to obtain a policy instance set conforming to a preset effectiveness relationship; and/or,
performing an execution relationship analysis on the policy instance set conforming to the preset effectiveness relationship to obtain a policy instance set in which execution elements satisfy a preset execution relationship.

In the above solution, the policy instance knowledge includes effectiveness indicator information that represents an expected outcome of the policy instance. The performing an effectiveness relationship analysis on the policy instance set in which policies are valid and have intersecting scopes of effect to obtain a policy instance set conforming to a preset effectiveness relationship includes:
determining relationship among effectiveness indicators in the policy instance set in which policies are valid and have intersecting scopes of effect, based on the effectiveness indicator information; and
obtaining the policy instance set conforming to the preset effectiveness relationship, based on the relationship among the effectiveness indicators;
wherein the preset effectiveness relationship includes at least one of the following: effectiveness indicators conflicting, effectiveness indicators overlapping, or effectiveness indicator(s) being included.

In the above solution, the performing an execution relationship analysis on the policy instance set conforming to the preset effectiveness relationship to obtain a policy instance set in which execution elements satisfy a preset execution relationship includes:
determining relationship among execution elements in the policy instance set conforming to the preset effectiveness relationship, based on the element instance knowledge; and
obtaining the policy instance set in which execution elements satisfy the preset execution relationship, based on the relationship among the execution elements;
wherein the preset execution relationship includes at least one of the following: execution elements conflicting, execution elements overlapping, or execution elements being correlated.

In the above solution, the performing optimization processing on the at least one target policy instance and the existing policy instance based on the policy relationship analysis result includes:
performing automatic or manual optimization processing on the at least one target policy instance and the existing policy instance based on the policy relationship analysis result.

In the above solution, the performing automatic optimization processing on the at least one target policy instance and the existing policy instance based on the policy relationship analysis result includes at least one of the following:
removing and/or deactivating an invalid policy instance(s);
removing and/or deactivating a redundant policy instance(s); or
removing and/or deactivating a low-priority policy instance(s) based on a priority policy.

In the above solution, after performing optimization processing on the at least one target policy instance based on the policy relationship analysis result, the method further includes:
updating the policy application knowledge based on the policy relationship analysis result.

In a second aspect, an embodiment of the present disclosure provides a apparatus for network policy management, comprising:
an obtaining module configured to obtain at least one target policy instance for network management;
an analysis module configured to perform policy relationship analysis on the at least one target policy instance and an existing policy instance based on policy application knowledge to obtain a policy relationship analysis result; and
an optimization module configured to perform optimization processing on the at least one target policy instance and the existing policy instance based on the policy relationship analysis result.

In a third aspect, an embodiment of the present disclosure provides an electronic device, comprising: a processor and a memory for storing a computer program executable on the processor, wherein the processor is configured to, when executing the computer program, perform the steps of the method according to the first aspect of the embodiments of the present disclosure.

In a fourth aspect, an embodiment of the present disclosure provides a computer storage medium having a computer program stored thereon, wherein when the computer program is executed by a processor, the steps of the method according to the first aspect of the embodiments of the present disclosure are implemented.

In the technical solutions provided by the embodiments of the present disclosure, at least one target policy instance for network management is obtaind; policy relationship analysis is performed on the at least one target policy instance and an existing policy instance based on policy application knowledge to obtain a policy relationship analysis result; and optimization processing is performed on the at least one target policy instance and the existing policy instance based on the policy relationship analysis result. In this way, policy relationship analysis can be performed on at least one target policy instance for network management and an existing policy instance based on policy application knowledge, and optimization processing can be performed on the at least one target policy instance and the existing policy instance based on the policy relationship analysis result, implementing systematic management of network policies, which can meet the universal management needs for systematic management of O&M management policies across various fields, levels, and cross-domains of the network, having the advantages of strong universality, high flexibility, and on-demand scalability.

### BRIEF DESCRIPTION OF THE DRAWINGS

FIG. 1 is a schematic flowchart of a method for network policy management according to an embodiment of the present disclosure.
FIG. 2 is a schematic architectural diagram of a system for network policy management according to an application embodiment of the present disclosure.
FIG. 3 is a structural schematic diagram of an apparatus for network policy management according to an embodiment of the present disclosure.
FIG. 4 is a structural schematic diagram of an electronic device according to an embodiment of the present disclosure.

### DETAILED DESCRIPTION

The present disclosure will be described in further detail below with reference to the accompanying drawings and embodiments.

Unless otherwise defined, all technical and scientific terms used herein have the same meaning as commonly understood by those skilled in the technical field to which this application belongs. The terms used in the specification of the present disclosure are for the purpose of describing specific embodiments only, and are not intended to limit the present disclosure.

Before further detailing the embodiments of the present disclosure, nouns and terms involved in the embodiments of the present disclosure are explained, and the nouns and terms involved in the embodiments of the present disclosure are applicable to the following explanations:

Autonomous Networks: Aim to build automated and intelligent O&M capabilities for the entire lifecycle of a network, providing consumers and vertical industry customers with new network and ICT services featuring "zero wait, zero touch, zero trouble", and creating "self-configuring, self-healing, self-optimizing" digital and intelligent O&M capabilities for smart network O&M.

Management: A set of processes responsible for describing, organizing, and controlling access to and management of the lifecycle requirements of information and organizational entities.

Managed Entity: A manageable object related to a product, service, and/or resource.

Management Domain: A domain that uses a common set of management mechanisms to manage its contents. A management domain is a managed entity with three key characteristics: 1) having a set of administrators defined to perform management operations on the managed entities the management domain contains; 2) defining a set of applications responsible for different management operations (e.g., monitoring, configuring, etc.); 3) defining a common set of management mechanisms, such as policy rules, used to manage the behavior of the managed entities contained in the management domain.

Policy (also known as Policy Instance): A policy is a set of rules used to manage and control changes and/or maintenance of the state of one or more managed objects. An organization is a policy-driven entity. Policies are a natural way to express rules and restrictions on behavior and then automatically enforce these rules and restrictions. The purpose of a policy is to ensure that consistent decisions are made to govern the behavior of the system.

Imperative Policy: A type of policy that uses statements to explicitly change the state of a set of target objects. The sequence of statements that make up the policy is explicitly defined. In various embodiments of the present disclosure, unless explicitly stated otherwise, a policy refers to a type of imperative policy, that is, a policy composed of an event, a condition, and an action. The event, condition, and action are respectively defined as follows:

Event: Anything that occurs on a timeline and is important to the management system (e.g., a change in the managed system and/or its environment).

Condition: A set of attributes, characteristics, and/or values, which are compared against a known set of attributes, characteristics, and/or values to determine a decision to be made.

Action: A set of operations that can be performed on a set of management entities, representing transformations or processing in the system being modeled.

Policy is an important feature to enhance the capabilities of autonomous networks. In the related art, autonomous network levels are defined to guide the automation and intelligence of networks and services, evaluate the value and advantages of autonomous network services, and guide the intelligent upgrading of operators and vendors, specifically as follows:

Manual O&M: Corresponds to Level 0 (L0). The system provides auxiliary monitoring capabilities, and all dynamic tasks need to be executed manually.

Assisted O&M: Corresponds to Level 1 (L1). The system can execute specific repetitive subtasks based on pre-configurations to improve execution efficiency.

Partial Autonomous Network: Corresponds to Level 2 (L2). In specific external environments, the system can enable automated closed-loop O&M for specific units based on predefined rules/policies. Level L2 allows static injection of rules, and policy implementation includes automatic closed-loop event monitoring, condition analysis, and action execution.

Conditional Autonomous Network: Corresponds to Level 3 (L3). Based on Level L2, the system can sense environmental changes in real-time and perform self-optimization and self-adjustment in specific network domains to adapt to external environments. Level L3 allows dynamic decoupling of rules. O&M personnel can dynamically edit and import policy rules according to the formal specification of policies during the system execution phase, which means the system needs the capability to systematically manage a much larger quantity of policy rules with a wider range of sources and more complex relationship.

Highly Autonomous Network: Corresponds to Level 4 (L4). Based on Level L3, the system can implement predictive or proactive closed-loop management of networks driven by services and customer experiences in more complex cross-multi-network-domain environments, thereby analyzing and making decisions. A typical feature of Level L4 is AI (Artificial Intelligence)-assisted rule generation, which means the policy rules themselves need to undergo application monitoring and effectiveness evaluation to achieve automatic iteration.

Fully Autonomous Network: Corresponds to Level 5 (L5). This level is the ultimate goal of telecom network evolution. The system possesses full-scenario closed-loop autonomous capabilities facing multiple services, multiple domains, and the entire lifecycle. A typical feature of Level L5 is adaptive evolution, which means policy rules need to dynamically adapt to changes in the internal and external environments of the system and undergo self-adaptive proactive evolution according to dynamically evolving system goals.

It can be understood that, with the technological evolution and development of autonomous networks, it is necessary to expand the policy management technology system of autonomous networks to achieve enhanced capabilities for standardized and formalized expression, systematic management, and dynamic evolution of policy rules. Based on this, in various embodiments of the present disclosure, a knowledge-driven method for network policy management is proposed, which meets the general requirements for systematic management of O&M management policies across various domains, levels, and cross-domains of autonomous networks, having the advantages of strong universality, high flexibility, and on-demand scalability.

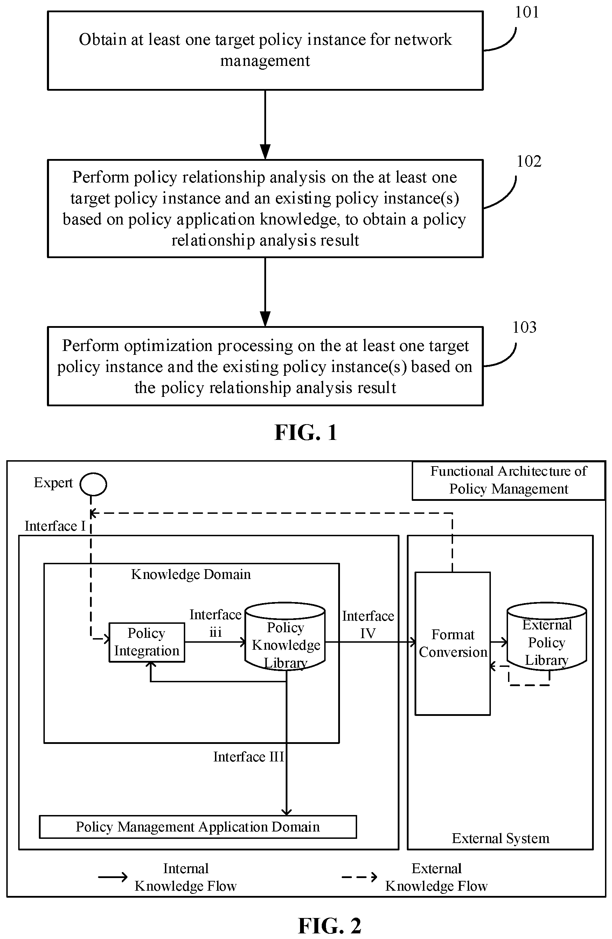

An embodiment of the present disclosure provides a method for network policy management, which can be applied to an electronic device having data processing capabilities, for example, a network policy management platform or a network policy management system. As shown in FIG. 1, the management method includes the following steps.

At step 101, at least one target policy instance for network management is obtaind.

At step 102, policy relationship analysis is performed on the at least one target policy instance and an existing policy instance(s) based on policy application knowledge, to obtain a policy relationship analysis result.

At step 103, optimization processing is performed on the at least one target policy instance and the existing policy instance(s) based on the policy relationship analysis result.

It can be understood that the embodiments of the present disclosure can perform policy relationship analysis on at least one target policy instance for network management and an existing policy instance(s) based on policy application knowledge, and perform optimization processing on the at least one target policy instance and the existing policy instance(s) based on the policy relationship analysis result, to implement systematic management of network policies, which can meet the universal management needs for systematic management of O&M management policies across various fields, levels, and cross-domains of the network, having the advantages of strong universality, high flexibility, and on-demand scalability.

Exemplarily, the operation of obtaining the at least one target policy instance for network management includes at least one of the following:
obtaining at least one externally imported target policy instance; or
obtaining at least one internally monitored target policy instance.

It can be understood that the network policy management system may obtain at least one externally imported target policy instance and/or obtain at least one internally monitored target policy instance, and further implement systematic management of policy instances based on the at least one target policy instance. The external import may include a policy instance imported by an expert or a policy instance imported by a policy knowledge base of an external system, and the internal monitoring may be at least one target policy instance monitored by the network policy management system based on a preset monitoring policy.

Exemplarily, the method further includes:
constructing the policy application knowledge based on policy instance knowledge and/or network management object instance knowledge.

Here, the network policy management system may construct the policy application knowledge based on the policy instance knowledge and/or network management object instance knowledge. Exemplarily, the policy application knowledge may be a policy application knowledge graph.

Knowledge Graph (KG) is one of the important branches of knowledge engineering. It structurally describes concepts and their interrelationship in the physical world in symbolic form. The basic composition format of a knowledge graph is a <entity, relationship, entity> triplet, where entities are linked to each other through relationship, forming a complex network knowledge structure. A knowledge graph is a multi-relational graph composed of entities and relationship, where entities and relationship are treated as nodes and different types of edges, respectively. It can be understood that by mining the relationship between instances of policy modeling and/or policy management modeling, relationship between entities can be constructed to obtain a policy application knowledge graph.

Exemplarily, the Resource Description Framework (RDF) language may be used to describe the aforementioned policy instance knowledge and/or network management object instance knowledge, and to construct the policy application knowledge graph. RDF is a resource description language influenced by metadata standards, frame systems, object-oriented languages, and other aspects, and is used to describe various network resources. Emergence of the RDF provides a standard data description framework for publishing structured data on the Web, and the RDF can convert various network resources into triplets for storage in a knowledge base.

Exemplarily, the policy application knowledge includes at least one of the following: object instance knowledge, policy instance knowledge, or element instance knowledge. The object instance knowledge is used to represent an object instance, the policy instance knowledge is used to represent a policy instance, and the element instance knowledge is used to represent an element instance. The performing policy relationship analysis on the at least one target policy instance and an existing policy instance based on policy application knowledge to obtain a policy relationship analysis result includes:
verifying the policy validity of the at least one target policy instance based on the policy instance knowledge to obtain a policy instance set in which policies are valid; and/or,
performing a scope of effect analysis on the policy instance set in which policies are valid and an existing policy instance based on the object instance knowledge to obtain a policy instance set in which policies are valid and have intersecting scopes of effect; and/or,
performing an effectiveness relationship analysis on the policy instance set in which policies are valid and have intersecting scopes of effect to obtain a policy instance set conforming to a preset effectiveness relationship; and/or,
performing an execution relationship analysis on the policy instance set conforming to the preset effectiveness relationship to obtain a policy instance set in which execution elements satisfy a preset execution relationship.

It can be understood that performing policy relationship analysis on the at least one target policy instance and the existing policy instance based on the policy application knowledge can perform relational classification and sorting on active policies for the same object or collection, and identify policy relationship analysis results. For example, it can identify invalid policies, redundant policies, conflicting policies, and correlated policies. An invalid policy refers to a policy that cannot take practical effect on any managed object instance due to reasons such as applicability; a redundant policy refers to a policy that is encompassed by other policies and can achieve the same effect without being triggered and executed separately; a conflicting policy refers to a policy that is triggered simultaneously with other policies but has inconsistent execution effects; an correlated policy refers to a policy that forms a chain reaction triggered by the execution effects of other policies.

In an application example, the policy application knowledge includes, but is not limited to: object instance knowledge, policy instance knowledge, and element instance knowledge. Descriptions of each instance knowledge are as follows:

### 1) Object instance knowledge

The policy application knowledge graph may maintain instance information for the current management domain and its managed objects for subsequent comprehensive analysis, specifically including, but not limited to:
Management domain instance status: instance statuses and subordination relationship of management domains at all levels;
Managed object instance status: instance statuses and subordination relationship of individual managed objects governed by management domains at all levels.

### 2) Policy instance knowledge

The policy application knowledge graph may maintain information for each policy instance for subsequent comprehensive analysis, specifically including, but not limited to:
Policy instance status: active/activated, suspended/deactivated, etc.;
Policy target scope: management domains and managed objects to which the policy applies;
Policy effectiveness indicators: indicators for evaluating the effectiveness of policy application, including but not limited to function, performance, security, scalability, fairness, etc.;
Policy execution elements: including but not limited to: subscribed trigger events, dependent condition variables, and invoked execution operations;
Policy relationship records: including but not limited to: information on other policy instances with relationship such as conflict/redundancy/association, specific relationship types (e.g., effectiveness indicators conflicting and/or execution elements conflicting), and related information descriptions (e.g., specific conflicting effectiveness indicators or execution elements, etc.).

### 3) Element instance knowledge

The policy application knowledge graph may maintain information for each execution element instance referenced by a policy for subsequent comprehensive analysis, specifically including, but not limited to:
Event instance information: reportable event instances, relationship among event instances (derivation, mutual exclusion, etc.);
Condition instance information: evaluable condition instances, relationship among condition instances (inclusion, overlap, mutual exclusion, etc.);
Action instance information: executable action instances, relationship among action instances (inclusion, influence, mutual exclusion, etc.);
Effectiveness indicator information (optional): relationship between target effectiveness expected to be achieved by the policy application and effectiveness indicators (inclusion, influence, mutual exclusion, etc.).

Exemplarily, the policy instance knowledge includes: effectiveness indicator information that represents an expected outcome of the policy instance. The performing an effectiveness relationship analysis on the policy instance set in which policies are valid and have intersecting scopes of effect to obtain a policy instance set conforming to a preset effectiveness relationship includes:
determining relationship among effectiveness indicators in the policy instance set in which policies are valid and have intersecting scopes of effect, based on the effectiveness indicator information; and
obtaining the policy instance set conforming to the preset effectiveness relationship, based on the relationship among the effectiveness indicators;
wherein the preset effectiveness relationship includes at least one of the following: effectiveness indicators conflicting, effectiveness indicators overlapping, or one effectiveness indicator being implied by another.

It can be understood that based on the above effectiveness relationship analysis, a policy instance set conforming to the preset effectiveness relationship can be obtained, providing basic data for subsequent policy optimization.

Exemplarily, the operation of performing the execution relationship analysis on the policy instance set conforming to the preset effectiveness relationship to obtain the policy instance set in which execution elements satisfy the preset execution relationship includes:
determining relationship among execution elements in the policy instance set conforming to the preset effectiveness relationship, based on the element instance knowledge; and
obtaining the policy instance set in which execution elements satisfy the preset execution relationship, based on the relationship among the execution elements;
wherein the preset execution relationship includes at least one of the following: execution elements conflicting, execution elements overlapping, or execution elements being correlated.

It can be understood that based on the above execution relationship analysis, a policy instance set conforming to the preset effectiveness relationship can be obtained, providing basic data for subsequent policy optimization.

In the above solution, the operation of performing optimization processing on the at least one target policy instance and the existing policy instance based on the policy relationship analysis result includes:
performing automatic or manual optimization processing on the at least one target policy instance and the existing policy instance based on the policy relationship analysis result.

Exemplarily, based on the policy relationship analysis result and relying on a policy management framework, automatic or manual optimization processing can be performed on active policies based on relational classification results.

Exemplarily, the operation of performing automatic optimization processing on the at least one target policy instance and the existing policy instance based on the policy relationship analysis result includes at least one of the following:
removing and/or deactivating an invalid policy instance(s);
removing and/or deactivating a redundant policy instance(s); or
removing and/or deactivating a low-priority policy instance(s) based on a priority policy.

It can be understood that performing automatic or manual optimization processing on active policies based on the policy relationship analysis result can implement systematic management of network policies, which can meet the universal management needs for systematic management of O&M management policies across various fields, levels, and cross-domains of the network, having the advantages of strong universality, high flexibility, and on-demand scalability.

Exemplarily, after performing optimization processing on the at least one target policy instance based on the policy relationship analysis result, the method further includes:
updating the policy application knowledge based on the policy relationship analysis result.

It can be understood that updating the policy application knowledge based on the policy relationship analysis result can utilize original policy rule knowledge in the policy knowledge base and combine it with newly input policy rule knowledge, and combine, reason, and create derived new policy knowledge through technologies such as knowledge reasoning and mining, thereby improving the completeness of policy knowledge.

The present disclosure is described in further detail below with reference to application embodiments.

A schematic architectural diagram of a network policy management system according to this application embodiment is shown in FIG. 2. Knowledge-driven policy management is implemented based on a fundamental knowledge management functional architecture, that is, the network policy management system can support static import, application, and update of policies. It specifically includes a policy integration submodule and a policy knowledge base. It supports the import of policy knowledge by O&M experts and the import, application, and passive update of policy knowledge from external systems.

In this application embodiment, the policy knowledge base may be multiplexed to implement the storage and reading functions of the above policy application knowledge graph, wherein reading scenarios of the policy application knowledge graph include:
providing corresponding policy application knowledge in response to policy application knowledge requests from various submodules within the systematic policy management;
providing corresponding policy application knowledge in response to policy application knowledge sharing needs of external systems.

Here, the policy application knowledge includes but is not limited to: object instance knowledge, policy instance knowledge, and element instance knowledge. For specifics, reference may be made to the foregoing descriptions, which are not repeated herein.

The processes of policy relationship analysis and policy optimization processing in this application embodiment are exemplarily described below:

### I. Policy Relationship Analysis

In this application embodiment, the policy relationship analysis includes the following four phases:
Phase 1: Verify the validity of the input policy to exclude invalid policies (policies that are non-executable, will not be triggered, and thus will not generate potential conflicts).
Phase 2: Analyze the scope of effect of all input valid policies to exclude situations where the scopes of effect of valid policies do not intersect. The scope of effect of a valid policy refers to the managed objects (for example, network physical and virtual resources, or network services, businesses, etc.) that can be acted upon or affected by the management operations automatically executed after the policy is triggered. If the scopes of effect of two valid policies do not intersect, meaning they will never act on the same managed object at any given time, then there will be no potential conflict between them.
Phase 3: Analyze the effectiveness relationship among valid policies sharing a common scope of effect to exclude situations where the value ranges of application effectiveness indicators for specific managed objects within the common scope are incompatible or irrelevant. The application effectiveness indicator of a valid policy targeting a specific managed object within its scope refers to the range of effectiveness indicator values that the policy maker expects to ensure the specific managed object maintains during the policy's validity period by applying this policy (for example, ensuring the average CPU utilization of a data center server remains between 40% and 80% by applying an automatic scaling policy). If the value ranges of application effectiveness indicators for specific managed objects of two valid policies with a common scope are incompatible, they cannot simultaneously achieve their respective application effectiveness indicators. This indicates a potential policy conflict; the effectiveness relationship analysis is terminated, and the execution relationship analysis proceeds. Otherwise, after further ruling out whether an inclusion relationship of effectiveness targets exists among the policies, the execution relationship analysis is further conducted.
Phase 4: Analyze policy execution relationship to identify policies that will not be triggered simultaneously, or will not be executed simultaneously, or policy relationship involving potential conflict, redundancy, inclusion, and derivation when executed simultaneously.

Exemplarily, the above Phase 1 is specifically executed as follows:
Utilize the policy application knowledge graph to screen the validity of input policies and exclude invalid policies. Invalid policies include but are not limited to the following situations:
(1) Applicability
   1) The policy instance state is inactive/deactivated;
   2) The set of managed objects governed by the management domain specified in the policy target scope is empty;
   3) The trigger event, evaluation condition, or execution action specified by the policy execution element is inapplicable or unsupported in the specified management domain/managed object;
(2) Validity
   1) The evaluation method specified by the policy effectiveness indicator is inapplicable or unsupported in the specified management domain/managed object;
   2) The current evaluation state of the policy effectiveness indicator is invalid.

Exemplarily, the above Phase 2 is specifically executed as follows:
Utilize the policy application knowledge graph to screen and analyze the target scope relationship between input policies and existing policies, confirming whether an intersection exists, and rule out potential conflict, overlap, and derivation relationship among policies with non-intersecting target scopes. The scope relationship analysis includes but is not limited to:
Utilize the subordination relationship among management domains/objects in the object instance knowledge within the policy application knowledge graph to derive direct and indirect relationship of policy target scopes, and deduce the set of all managed objects practically applied to each policy;
Calculate the intersection S₁ of the actual managed object sets for the policies participating in the analysis. If the intersection is empty, any scope overlap relationship is excluded, and the policy relationship analysis ends; otherwise, proceed to the next step.

Exemplarily, the above Phase 3 is specifically executed as follows:
Utilize the policy application knowledge graph to screen and analyze the effectiveness indicator relationship of input policies, confirm whether intersections exist, and identify related policies where effectiveness indicators exhibit conflict, overlap, or inclusion relationship. The effectiveness relationship analysis steps include but are not limited to:
(1) Utilize the inclusion, derivation, and association relationship among effectiveness indicators in the policy instance knowledge within the policy application knowledge graph to derive direct and indirect relationship of policy effectiveness indicators, and deduce the set of all effectiveness indicators and their value ranges practically applied to each policy;
(2) Calculate the intersection Sᵢ₂ of the practical effectiveness indicator value range sets for each object i in the managed object set S₁ sharing the common scope of effect for each policy participating in the analysis, and record:
   Object set S₃, where for each object j, Sⱼ₂ is empty; meaning that any possible effectiveness indicator values for the managed object i included in object set S3 cannot simultaneously satisfy all participating analyzed policies;
   Object set S₄, where for each object k, Sₖ₂ is not empty; meaning that for some effectiveness indicators of the managed object k included in object set S4, there exists a value range Sk2 that can simultaneously satisfy all participating analyzed policies.
(3) Check set S₃. If set S₃ is not empty, it is determined that the expected policy effectiveness regarding object set S₃ cannot coexist. If triggered simultaneously, potential conflicts exist; thus, the effectiveness relationship analysis ends, and the execution relationship analysis proceeds. Otherwise, the target indicators of all analyzed policies have an intersection, indicating further coordination space even if triggered simultaneously, and no absolute conflict exists.
(4) Check set S₄. For each managed object m within it, verify whether Sₘ₂ is identical to the original value range of the input policy's effectiveness indicator. If the above relationship holds true for all managed objects included in S₄, it indicates that the input policy is already included by other policies. The policy relationship analysis ends; no policy conflict exists, and there is no need to explicitly add this policy. Otherwise, it is preliminarily determined that target overlap relationship exist among policies. Proceed with the subsequent execution relationship analysis, and if necessary, optimize the related policies later by combining the S₄ records.

Exemplarily, the above Phase 4 is specifically executed as follows:
Utilize the policy application knowledge graph information to screen and analyze the relationship of execution elements of the input policies, and identify related policies where execution elements exhibit conflict, overlap, and association relationship. The execution relationship analysis steps include but are not limited to:
(1) Utilize the conflict, overlap, and association relationship among execution elements in the element instance knowledge within the policy application knowledge graph to derive direct and indirect relationship of events, conditions, and operations correlated with the policy execution elements, and deduce the set of system context parameters (input conditions and output conditions) for all execution elements practically applied to each policy and their value ranges;
(2) Utilize the policy application knowledge graph to determine whether the input policies have the possibility of being triggered simultaneously:
   Calculate the intersection S₅ of the policy's trigger events and all its derived events. If S₅ is not empty, the policies can be simultaneously triggered by any event included in S₅. Otherwise, calculate the union S₆ of the policy's trigger events and all its derived events. Further utilize the mutually exclusive relationship among events in the policy application knowledge graph to eliminate mutually exclusive events one by one, yielding S₇. If S₇ is empty, the input policies cannot be triggered simultaneously; otherwise, check whether the remaining events in S₇ can still simultaneously trigger multiple input policies.
   **[00166]** If the input policies do not have the possibility of being triggered simultaneously, determine that the policies are irrelevant and exit the policy execution relationship analysis; otherwise, continue to execute the evaluation condition relationship analysis.
(3) Utilize the policy application knowledge graph to determine whether there is a possibility of simultaneous execution after the input policies are simultaneously triggered:
   Calculate the intersection of the value ranges of the policy's evaluation conditions and its derived conditions. Use S₈ to record the set of evaluation conditions referenced by multiple policies; use S₉ to record each evaluation condition m belonging to S₈ and its value range S₉ₘ that simultaneously enables multiple policies.

If both S₈ and S₉ are empty, determine that the policies are irrelevant, and end the policy execution relationship analysis.

If S₉ is not empty, the input policies may be simultaneously executed when the S₉ condition is met, and further analyze the policy execution action relationship.

(4) Utilize the policy application knowledge graph to determine whether there is a possibility of execution operation conflicts when the input policies are triggered and executed simultaneously:
Calculate the union of the execution actions and their derived actions for the input policies;
Utilize the mutually exclusive relationship among actions in the policy application knowledge graph to identify one by one whether mutually exclusive actions exist. If so, determine that a conflict relationship exists among the input policies;
Utilize the inclusion relationship among actions in the policy application knowledge graph to identify one by one whether inclusion-related actions exist. If so, determine that an inclusion relationship exists among the input policies, and the included policy is a redundant policy;
Utilize the inclusion relationship among actions in the policy application knowledge graph to identify one by one whether derivation-related actions exist. If so, determine that a derivation relationship exists among the input policies.

### II. Policy Optimization Processing

In this application embodiment, the policy optimization processing includes two parts:
First, performing automatic/manual dynamic optimization on the input policy set according to the analysis results of the policy relationship analysis.

Second, dynamically improving related information in the policy knowledge base according to the analysis results of the policy relationship analysis.

To this end, the method of defining policy optimization meta-policies can be adopted to achieve an automatic closed loop of iterative optimization of the policy itself and its management knowledge; an escalation mechanism can also be used to remind experts or external systems of the policy analysis results and execute the policy/knowledge optimization suggestions fed back by them.

The specific mechanisms for automated policy optimization include but are not limited to:
Deactivating invalid policies while recording/updating the corresponding policy instance status in the knowledge base;
Deactivating redundant (included) policies while recording/updating the relationship between the corresponding policy instances in the knowledge base;
Eliminating policy mutually exclusive relationship based on priorities or other predefined meta-policies. According to statically configured/dynamically specified priority levels, distinguish mutually exclusive policies of different priorities based on policy source (VIP customer service guarantee takes priority over routine management and maintenance), acting object (primary equipment takes priority over standby equipment), and effectiveness indicators (service guarantee takes priority over energy saving), deactivate low-priority policy instances, and simultaneously record/update the status and mutually exclusive relationship of policy instances in the policy knowledge base.

An application example is given below to exemplarily explain the construction of policy application knowledge in this application embodiment, which includes constructing object instance knowledge, policy instance knowledge, and element instance knowledge, as follows:

### Object Instance Knowledge

The policy application knowledge graph maintains instance information for the current management domain and its managed objects for subsequent comprehensive analysis, specifically including but not limited to:
Management domain instance status: Instance statuses and subordination relationship of management domains at all levels. For example, Beijing Municipality, Fengtai District, No. 1 Data Center, and 1st-3rd Floor Equipment Rooms are different management domains, having sequential inclusion relationship.

Managed object instance status: Instance statuses and subordination relationship of individual managed objects governed by management domains at all levels. For example, the North China Region's Huawei 5GC (5G Core Network) primary equipment is deployed in the 1st Floor Equipment Room of No. 1 Data Center, Fengtai District, Beijing, and the standby equipment is deployed in the No. 2 Equipment Room; whereas the North China Region's ZTE 5GC primary equipment is deployed in the No. 3 Equipment Room, and the standby equipment is deployed in the No. 2 Equipment Room. On the one hand, from a network perspective, each 5GC managed object itself consists of different types of NF (Network Function) network elements such as SMF (Session Management Function), AMF (Access and Mobility Management Function), UPF (User Plane Function) and their specific network topology connection relationship. Each NF instance corresponds to a VNF (Virtual Network Function) instance, one VNF instance can contain multiple VNFC (Virtualized Network Function Component) components, and each VNFC component can consist of a group of VMs (Virtual Machines) interconnected through specific network topology connections. On the other hand, from a resource perspective, each active VM corresponds to a process on a physical server, sharing all physical resources (CPU, memory, network, etc.) of that physical server; each server corresponds to an access slot position on a rack, sharing the ToR (Top of Rack) switch bandwidth resources and power efficiency of that rack.

### Policy Instance Knowledge

The policy application knowledge graph maintains information for each policy instance for subsequent comprehensive analysis, specifically including but not limited to:
Policy instance status: Active, suspended. For example, the VNFs, physical servers, ToR switches, routers, and other supporting equipment (such as equipment room air conditioners) in the No. 1 and No. 3 Equipment Rooms bearing the primary equipment are all in a normal working state, and their corresponding policy instances are in an active state; correspondingly, because the managed objects in the No. 2 Equipment Room do not actually bear services, the policy instances correlated with it are all in a suspended state.

Policy target scope: The management domain and managed objects to which the policy applies. That is, the object instance knowledge described above.

Policy effectiveness indicators: Indicators evaluating the functions, performance, and availability of policy application. For example, energy consumption indicators, service performance indicators, resource efficiency indicators, redundancy guarantee indicators, etc.

Policy execution elements: Subscribed trigger events (for example, time-driven events such as major holidays, specific times, seasons, and tournaments), dependent condition variables (for example, threshold-driven conditions such as excessively low power efficiency, excessively high load, and insufficient redundancy), and invoked execution operations (for example, VNF migration/shutdown/startup/restart, link switching, physical machine shutdown/startup, increasing/decreasing redundancy, raising/lowering equipment room temperature, increasing CPU frequency/reducing rack power consumption, etc.).

### Element Instance Knowledge

The policy application knowledge graph maintains information for each execution element instance referenced by a policy for subsequent comprehensive analysis, specifically including but not limited to:
Event instance information: Reportable event instances, a relationship among event instances (derivation, mutual exclusion, etc.). For example, a derivation relationship exists between the College Entrance Examination and summer. A mutually exclusive relationship exists between the College Entrance Examination and winter.

Condition instance information: Evaluable condition instances, relationship among condition instances (inclusion, overlap, mutual exclusion, etc.). For example, inclusion, overlap, and mutually exclusive relationship exist between simple conditions due to the value ranges of indicators, as well as inclusion, overlap, and mutually exclusive relationship formed between complex conditions due to "AND", "OR", and "NOT" logical combination operations of simple conditions.

Action instance information: Executable action instances, relationship among action instances (inclusion, influence, mutual exclusion, etc.). For example, scaling down and scaling up are mutually exclusive operations, physical machine shutdown includes the migration/shutdown of VNFs on it, and increasing the CPU frequency of a certain server will have a potential impact on the management operations of the power supply of its rack.

Effectiveness indicator information (optional): Target effectiveness expected to be achieved by policy application, relationship among effectiveness indicators (inclusion, influence, mutual exclusion, etc.). Similar to condition instance information, effectiveness indicators can also be regarded as conditions or logical combinations of several conditions; therefore, mutual relationship will also occur due to indicator values and condition combinations. For example, inclusion, overlap, and mutually exclusive relationship exist between simple conditions due to the value ranges of indicators, as well as inclusion, overlap, and mutually exclusive relationship formed between complex conditions due to "AND", "OR", and "NOT" logical combination operations of simple conditions.

An application example is given below to exemplarily explain the policy relationship analysis in this application embodiment. Taking a certain location's wireless network link resource pool management policy knowledge base as an example, some input policies are as follows:
Policy a: From 0:00 AM to 6:00 AM every day, the allocated bandwidth of Link A is adjusted to 300Mbps; during the rest of the time, the allocated bandwidth of Link A is restored to 500Mbps. Its effectiveness indicators include link utilization (value range is 50%-95%).
Policy b: During busy hours in cells in this area, if the PRB (Physical Resource Block) utilization rate is greater than 50%, load balancing among adjacent cells is turned on. Its effectiveness indicators include PRB utilization (40%-60%).
Policy c: When the link utilization of Link A is greater than 85%, if the duration exceeds 60% of the running time, the allocated bandwidth is adjusted to 800Mbps. Its effectiveness indicators include link utilization (value range is 50%-95%).
Policy d: During holidays, the allocated bandwidth of Link A is adjusted to 800Mbps; during non-holidays, the allocated bandwidth of Link A is restored to 500Mbps. Its effectiveness indicators include link utilization (value range is 50%-95%).
Policy e: From 0:00 AM to 6:00 AM every day, the allocated bandwidth of Link B is adjusted to 300Mbps-500Mbps; during the rest of the time, the allocated bandwidth of Link B is restored to 100Mbps-400Mbps. Its effectiveness indicators include link utilization (value range is 50%-80%).
Policy f: Devices X and Y can communicate via Link A or B. When the traffic between X and Y is low (below 200Mbps), only Link B is used for communication; when the traffic between X and Y is between 200Mbps and 500Mbps, only Link A is used for communication; when the traffic between X and Y is too large (greater than 500Mbps), link aggregation is adopted. Its effectiveness indicators include link utilization (value range is 60%-80%).

### "Policy validity screening":

Among them, policy b "During busy hours in cells in this area, if the PRB utilization rate is greater than 50%, load balancing among adjacent cells is turned on" is not applicable to the wireless network link resource pool management policy knowledge base, and is an invalid policy within this knowledge base.

### "Policy scope relationship analysis":

After validity screening, the invalid policy b is excluded. The scope relationship of the remaining input policies are analyzed, and the actual managed objects are as follows:
Policy a: Link A
Policy c: Link A
Policy d: Link A
Policy e: Link B
Policy f: Link A and Link B

Through analysis, it is concluded that there are intersections among the managed objects of the above policies.

### "Policy effectiveness relationship analysis":

Furthermore, a policy effectiveness relationship analysis is performed on policies a, c, d, e, and f.

Targeting the intersected managed objects, the analysis of the effectiveness indicator "link utilization" is as follows:
Link utilization: The value ranges of policies a, c, and d are consistent, and the value range of policy e overlaps; thus, it is necessary to proceed to the execution relationship analysis for further analysis.

"Policy execution relationship analysis":
The execution relationship of policies a, c, d, e, and f are further analyzed:

Policy a: From 0:00 AM to 6:00 AM every day, the allocated bandwidth of Link A is adjusted to 300Mbps; during the rest of the time, the allocated bandwidth of Link A is restored to 500Mbps.

Wherein, Trigger event: from 0:00 AM to 6:00 AM every day; Evaluation condition: none; Execution action: the allocated bandwidth of Link A is adjusted to 500Mbps.

Policy c: When the link utilization of Link A is greater than 85%, if the duration exceeds 60% of the running time, the allocated bandwidth is adjusted to 800Mbps.

Wherein, Trigger event: when the link utilization of Link A is greater than 85%; Evaluation condition: duration exceeds 60% of the running time; Execution action: bandwidth is adjusted to 800Mbps.

Policy d: During holidays, the allocated bandwidth of Link A is adjusted to 800Mbps; during non-holidays, the allocated bandwidth of Link A is restored to 500Mbps.

Wherein, Trigger event: running Link A during holidays; Evaluation condition: none; Execution action: bandwidth of Link A is adjusted to 800Mbps.

Policy e: From 0:00 AM to 6:00 AM every day, the allocated bandwidth of Link B is adjusted to 300Mbps-500Mbps; during the rest of the time, the allocated bandwidth of Link B is restored to 100Mbps-400Mbps.

Wherein, Trigger event: from 0:00 AM to 6:00 AM every day; Evaluation condition: none; Execution action: the allocated bandwidth of Link B is adjusted to 300Mbps-500Mbps.

Policy f: Devices X and Y can communicate via Link A or B. When the traffic between X and Y is low (below 200Mbps), only Link B is used for communication; when the traffic between X and Y is between 200Mbps and 500Mbps, only Link A is used for communication; when the traffic between X and Y is too large (greater than 500Mbps), link aggregation is adopted.

Wherein, Trigger event: when the traffic between X and Y is too large; Evaluation condition: none; Execution action: link aggregation.

Targeting the intersected managed objects, the intersections of the trigger events for policies a, c, d, e, and f are respectively calculated, wherein:
The intersected trigger event for policies a and c is: from 0:00 AM to 6:00 AM every day, when the link utilization of Link A is greater than 85%;
The intersected trigger event for policies a and d is: from 0:00 AM to 6:00 AM during holidays;
The intersected trigger event for policies c and d is: running Link A during holidays, and when the link utilization is greater than 85%.

Furthermore, the intersections of the evaluation conditions for policies a, c, and d are respectively calculated, wherein:
Policies a and d have no evaluation conditions.

Finally, a union of the execution actions of policies a, c, and d is taken, and mutual exclusivity and inclusion are judged one by one. The analysis concludes:
For policies a and c, when the trigger event is from 0:00 AM to 6:00 AM every day and the link utilization of Link A is greater than 85%, the execution actions are mutually exclusive, making them conflicting policies.

For policies a and d, when the trigger event is from 0:00 AM to 6:00 AM during holidays, the execution actions are mutually exclusive, making them conflicting policies.

For policies c and d, when the trigger event is running Link A during holidays and the link utilization is greater than 85%, the execution actions are the same, both maintaining the allocated bandwidth at 30MHz, which is a derivation relationship.

Targeting the intersected managed objects, an implicit relationship between Link A and Link B is obtained for policy f through knowledge reasoning, that is, when the traffic between X and Y is too large (greater than 500Mbps), the link utilization of the aggregated Link A and Link B is between 60%-80%.

Superimposed analysis on policies a, c, d, e, and f:
The intersected trigger event for policies a, e, and f is: from 0:00 AM to 6:00 AM every day, when the traffic between X and Y is too large (greater than 500Mbps);
The intersected trigger event for policies d, e, and f is: from 0:00 AM to 6:00 AM during holidays, when the traffic between X and Y is too large (greater than 500Mbps);
The intersected trigger event for policies c, e, and f is: from 0:00 AM to 6:00 AM every day, when the traffic between X and Y is too large (greater than 500Mbps) and the link utilization of Link A is greater than 85%.

Furthermore, the intersection of the evaluation conditions is taken. Only policy c has an evaluation condition: if the duration exceeds 60% of the running time.

Finally, a union of the execution actions of policies a, c, d, e, and f is taken, and mutual exclusivity and inclusion operation (judgement) is performed one by one. The analysis concludes:
For policies a, e, and f, when the trigger event is from 0:00 AM to 6:00 AM every day and the traffic between X and Y is too large (greater than 500Mbps), the execution actions intersect, which is a derivation relationship.

For policies d, e, and f, when the trigger event is from 0:00 AM to 6:00 AM during holidays, the execution actions intersect, which is a derivation relationship.

For policies c, e, and f, when the trigger event is running Link A during holidays and the link utilization is greater than 85%, the execution actions intersect. This is a derivation relationship.

In order to implement the method of the embodiments of the present disclosure, an embodiment of the present disclosure also provides an apparatus for network policy management. The apparatus for network policy management corresponds to the method for network policy management described above, and the various steps in the above embodiments of the method for network policy management are also fully applicable to this embodiment of the apparatus for network policy management.

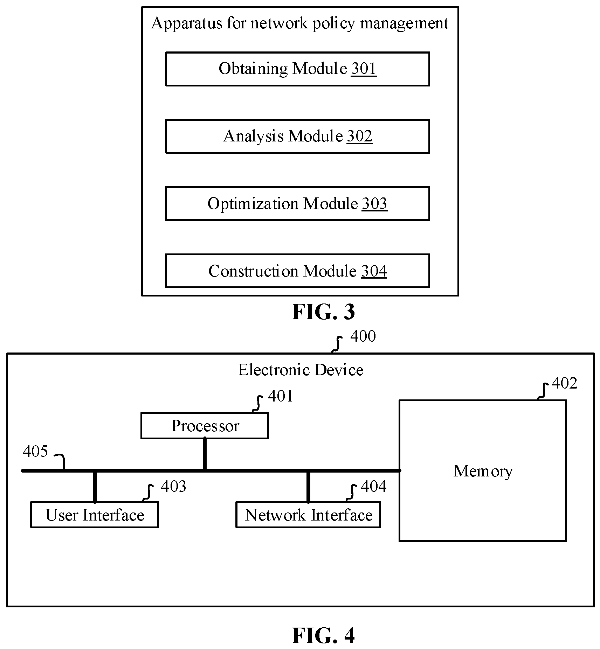

As shown in FIG. 3, the apparatus for network policy management includes: an obtaining module 301, an analysis module 302, and an optimization module 303. The obtaining module 301 is configured to obtain at least one target policy instance for network management; the analysis module 302 is configured to perform policy relationship analysis on the at least one target policy instance and an existing policy instance based on policy application knowledge to obtain a policy relationship analysis result; the optimization module 303 is configured to perform optimization processing on the at least one target policy instance and the existing policy instance based on the policy relationship analysis result.

Exemplarily, in obtaining the at least one target policy instance for network management, the obtaining module 301 is configured to perform at least one of the following:
obtaining at least one externally imported target policy instance; or
obtaining at least one internally monitored target policy instance.

Exemplarily, the apparatus for network policy management further includes: a construction module 304 configured to construct the policy application knowledge based on policy instance knowledge and/or network management object instance knowledge.

Exemplarily, the policy application knowledge includes at least one of the following: object instance knowledge, policy instance knowledge, or element instance knowledge. The object instance knowledge is used to represent an object instance, the policy instance knowledge is used to represent a policy instance, and the element instance knowledge is used to represent an element instance. The analysis module 302 is specifically configured to:
verify the policy validity of the at least one target policy instance based on the policy instance knowledge to obtain a policy instance set in which policies are valid; and/or,
perform a scope of effect analysis on the policy instance set in which policies are valid and an existing policy instance based on the object instance knowledge to obtain a policy instance set in which policies are valid and have intersecting scopes of effect; and/or,
perform an effectiveness relationship analysis on the policy instance set in which policies are valid and have intersecting scopes of effect to obtain a policy instance set conforming to a preset effectiveness relationship; and/or,
perform an execution relationship analysis on the policy instance set conforming to the preset effectiveness relationship to obtain a policy instance set in which execution elements satisfy a preset execution relationship.

Exemplarily, the policy instance knowledge includes: effectiveness indicator information that represents an expected outcome of the policy instance. In performing the effectiveness relationship analysis on the policy instance set in which policies are valid and have intersecting scopes of effect to obtain a policy instance set conforming to a preset effectiveness relationship, the analysis module 302 is configured to:
determine a relationship among effectiveness indicators in the policy instance set in which policies are valid and have intersecting scopes of effect, based on the effectiveness indicator information; and
obtain the policy instance set conforming to the preset effectiveness relationship, based on the relationship among the effectiveness indicators;
wherein the preset effectiveness relationship includes at least one of the following: effectiveness indicators conflicting, effectiveness indicators overlapping, or effectiveness indicator(s) being included.
Exemplarily, in performing the execution relationship analysis on the policy instance set conforming to the preset effectiveness relationship to obtain the policy instance set in which execution elements satisfy the preset execution relationship, the analysis module 302 is configured to:
   determine a relationship among execution elements in the policy instance set conforming to the preset effectiveness relationship, based on the element instance knowledge; and
   obtain the policy instance set in which execution elements satisfy the preset execution relationship, based on the relationship among the execution elements;
   wherein the preset execution relationship includes at least one of the following: execution elements conflicting, execution elements overlapping, or execution elements being correlated.

Exemplarily, the optimization module 303 is specifically configured to:
perform automatic or manual optimization processing on the at least one target policy instance and the existing policy instance based on the policy relationship analysis result.

Exemplarily, in performing automatic optimization processing on the at least one target policy instance and the existing policy instance based on the policy relationship analysis result, the processor is configured to perform at least one of the following:
removing and/or deactivating an invalid policy instance(s);
removing and/or deactivating a redundant policy instance(s); or
removing and/or deactivating a low-priority policy instance(s) based on a priority policy.
Exemplarily, the optimization module 303 is further configured to:
   update the policy application knowledge based on the policy relationship analysisresult.

In practical applications, the obtaining module 301, the analysis module 302, the optimization module 303, and the construction module 304 can be implemented by a processor in the apparatus for network policy management. Naturally, the processor needs to run a computer program in a memory to implement its functions.

It should be noted that: when the apparatus for network policy management provided in the above embodiments performs network policy management, the division of the above program modules is only used as an example for illustration. In practical applications, the above processing distribution can be completed by different program modules according to needs, that is, the internal structure of the apparatus is divided into different program modules to complete all or part of the processing described above. In addition, the embodiments of the apparatus for network policy management and the method for network policy management provided in the above embodiments belong to the same concept. For specific implementation processes, refer to the method embodiments, which will not be repeated here.

Based on the hardware implementation of the above program modules, and in order to implement the method of the embodiments of the present disclosure, an embodiment of the present disclosure also provides an electronic device. FIG. 4 only shows an exemplary structure of the electronic device rather than the entire structure, and part or all of the structure shown in FIG. 4 can be implemented as required.

As shown in FIG. 4, the electronic device 400 provided by the embodiments of the present disclosure includes: at least one processor 401, a memory 402, a user interface 403, and at least one network interface 404. The various components in the electronic device 400 are coupled together through a bus system 405. It can be understood that the bus system 405 is used to implement connection and communication among these components. The bus system 405 includes a data bus, and further includes a power bus, a control bus, and a status signal bus. However, for clarity of description, all various buses are labeled as the bus system 405 in FIG. 4.

Hrein, the user interface 403 may include a display, a keyboard, a mouse, a trackball, a click wheel, keys, buttons, a touchpad, or a touch screen, etc.

The memory 402 in the embodiments of the present disclosure is used to store various types of data to support the operations of the electronic device. Examples of such data include any computer program used for operating on the electronic device.

The method for network policy management disclosed in the embodiments of the present disclosure can be applied to the processor 401 or implemented by the processor 401. The processor 401 may be an integrated circuit chip with signal processing capabilities. During the implementation process, each step of the method for network policy management can be completed by a hardware integrated logic circuit or software-form instructions in the processor 401. The aforementioned processor 401 may be a general-purpose processor, a Digital Signal Processor (DSP), or other programmable logic devices, discrete gate or transistor logic devices, discrete hardware components, etc. The processor 401 can implement or execute various methods, steps, and logical block diagrams disclosed in the embodiments of the present disclosure. The general-purpose processor may be a microprocessor or any conventional processor, etc. The steps of the method disclosed in conjunction with the embodiments of the present disclosure can be directly embodied as executed and completed by a hardware decoding processor, or executed and completed by a combination of hardware and software modules in the decoding processor. The software modules may be located in a storage medium, and this storage medium is located in the memory 402. The processor 401 reads the information in the memory 402 and completes the steps of the method for network policy management provided in the embodiments of the present disclosure in combination with its hardware.

In an exemplary embodiment, the electronic device can be implemented by one or more Application Specific Integrated Circuits (ASICs), DSPs, Programmable Logic Devices (PLDs), Complex Programmable Logic Devices (CPLDs), Field Programmable Gate Arrays (FPGAs), general-purpose processors, controllers, Micro Controller Units (MCUs), Microprocessors, or other electronic components for performing the aforementioned methods.

It can be understood that the memory 402 can be a volatile memory or a non-volatile memory, or can include both volatile and non-volatile memories. Wherein, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disk, or a Compact Disc Read-Only Memory (CD-ROM); the magnetic surface memory may be a magnetic disk memory or a magnetic tape memory. The volatile memory may be a Random Access Memory (RAM), which is used as an external cache. By way of exemplary but non-limiting description, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Sync Link Dynamic Random Access Memory (SLDRAM), and Direct Rambus Random Access Memory (DRRAM). The memory described in the embodiments of the present disclosure is intended to include, but is not limited to, these and any other suitable types of memory.

In an exemplary embodiment, an embodiment of the present disclosure further provides a computer storage medium, which specifically can be a computer-readable storage medium, for example, including a memory 402 storing a computer program. The computer program can be executed by the processor 401 of the electronic device to complete the steps of the method in the embodiments of the present disclosure. The computer-readable storage medium can be a memory such as ROM, PROM, EPROM, EEPROM, Flash Memory, magnetic surface memory, optical disk, or CD-ROM.

It should be noted that: terms such as "first" and "second" are used to distinguish similar objects, and are not necessarily used to describe a specific sequence or chronological order.

In addition, the technical solutions recorded in the embodiments of the present disclosure can be arbitrarily combined without conflict.

The above are merely specific embodiments of the present disclosure, but the protection scope of the present disclosure is not limited thereto. Any person skilled in the art can easily think of changes or substitutions within the technical scope disclosed in the present disclosure, and all of these should be covered by the protection scope of the present disclosure. Therefore, the protection scope of the present disclosure shall be defined by the protection scope of the claims.

## Claims

1. A method for network policy management, comprising:
obtaining at least one target policy instance for network management;
performing policy relationship analysis on the at least one target policy instance and an existing policy instance based on policy application knowledge, to obtain a policy relationship analysis result; and
performing optimization processing on the at least one target policy instance and the existing policy instance based on the policy relationship analysis result.

2. The method according to claim 1, wherein obtaining the at least one target policy instance for network management comprises at least one of the following:
obtaining at least one externally imported target policy instance; or
obtaining at least one internally monitored target policy instance.

3. The method according to claim 1, further comprising:
constructing the policy application knowledge based on at least one of policy instance knowledge and/or network management object instance knowledge.

4. The method according to claim 1, wherein the policy application knowledge comprises at least one of the following:
object instance knowledge,
policy instance knowledge, or
element instance knowledge;
wherein the object instance knowledge is used to represent an object instance; the policy instance knowledge is used to represent a policy instance; and the element instance knowledge is used to represent an element instance; and
wherein performing policy relationship analysis on the at least one target policy instance and the existing policy instance based on policy application knowledge to obtain the policy relationship analysis result comprises:
verifying policy validity of the at least one target policy instance based on the policy instance knowledge, to obtain a policy instance set in which policies are valid; and/or,
performing a scope of effect analysis on the policy instance set in which policies are valid and the existing policy instance based on the object instance knowledge, to obtain a policy instance set in which policies are valid and have intersecting scopes of effect; and/or,
performing an effectiveness relationship analysis on the policy instance set in which policies are valid and have intersecting scopes of effect, to obtain a policy instance set conforming to a preset effectiveness relationship; and/or,
performing an execution relationship analysis on the policy instance set conforming to the preset effectiveness relationship, to obtain a policy instance set in which execution elements satisfy a preset execution relationship.

5. The method according to claim 4, wherein the policy instance knowledge comprises: effectiveness indicator information that represents an expected outcome of the policy instance; and
wherein performing the effectiveness relationship analysis on the policy instance set in which policies are valid and have intersecting scopes of effect to obtain the policy instance set conforming to the preset effectiveness relationship comprises:
determining a relationship among effectiveness indicators in the policy instance set in which policies are valid and have intersecting scopes of effect, based on the effectiveness indicator information; and
obtaining the policy instance set conforming to the preset effectiveness relationship, based on the relationship among the effectiveness indicators;
wherein the preset effectiveness relationship comprises at least one of the following: effectiveness indicators conflicting, effectiveness indicators overlapping, or one effectiveness indicator being implied by another.

6. The method according to claim 4, wherein performing the execution relationship analysis on the policy instance set conforming to the preset effectiveness relationship to obtain the policy instance set in which execution elements satisfy the preset execution relationship comprises:
determining a relationship among execution elements in the policy instance set conforming to the preset effectiveness relationship, based on the element instance knowledge; and
obtaining the policy instance set in which execution elements satisfy the preset execution relationship, based on the relationship among the execution elements;
wherein the preset execution relationship comprises at least one of the following: execution elements conflicting, execution elements overlapping, or execution elements being correlated.

7. The method according to claim 1, wherein performing optimization processing on the at least one target policy instance and the existing policy instance based on the policy relationship analysis result comprises:
performing automatic or manual optimization processing on the at least one target policy instance and the existing policy instance based on the policy relationship analysis result.

8. The method according to claim 7, wherein performing automatic optimization processing on the at least one target policy instance and the existing policy instance based on the policy relationship analysis result comprises at least one of the following:
removing and/or deactivating an invalid policy instance(s);
removing and/or deactivating a redundant policy instance(s); or
removing and/or deactivating a low-priority policy instance(s) based on a priority policy.

9. The method according to claim 1, wherein after performing optimization processing on the at least one target policy instance based on the policy relationship analysis result, the method further comprises:
updating the policy application knowledge based on the policy relationship analysis result.

10. A apparatus for network policy management, comprising:
an obtaining module configured to obtain at least one target policy instance for network management;
an analysis module configured to perform policy relationship analysis on the at least one target policy instance and an existing policy instance based on policy application knowledge, to obtain a policy relationship analysis result; and
an optimization module configured to perform optimization processing on the at least one target policy instance and the existing policy instance based on the policy relationship analysis result.

11. The management apparatus according to claim 10, wherein in obtaining the at least one target policy instance for network management, the obtaining module is configured to perform at least one of the following:
obtain at least one externally imported target policy instance; or
obtain at least one internally monitored target policy instance.

12. The management apparatus according to claim 10, wherein the management apparatus further comprises a construction module configured to construct the policy application knowledge based on policy instance knowledge and/or network management object instance knowledge.

13. The management apparatus according to claim 10, wherein the policy application knowledge comprises at least one of the following: object instance knowledge, policy instance knowledge, or element instance knowledge; the object instance knowledge is used to represent an object instance, the policy instance knowledge is used to represent a policy instance, and the element instance knowledge is used to represent an element instance; and
wherein the analysis module is specifically configured to:
verify the policy validity of the at least one target policy instance based on the policy instance knowledge, to obtain a policy instance set in which policies are valid; and/or,
perform a scope of effect analysis on the policy instance set in which policies are valid and the existing policy instance based on the object instance knowledge, to obtain a policy instance set in which policies are valid and have intersecting scopes of effect; and/or,
perform an effectiveness relationship analysis on the policy instance set in which policies are valid and have intersecting scopes of effect, to obtain a policy instance set conforming to a preset effectiveness relationship; and/or,
perform an execution relationship analysis on the policy instance set conforming to the preset effectiveness relationship, to obtain a policy instance set in which execution elements satisfy a preset execution relationship.

14. The management apparatus according to claim 13, wherein the policy instance knowledge comprises: effectiveness indicator information that represents an expected outcome of the policy instance; and
wherein performing the effectiveness relationship analysis on the policy instance set in which policies are valid and have intersecting scopes of effect to obtain the policy instance set conforming to the preset effectiveness relationship, the analysis module is configured to:
determine a relationship among effectiveness indicators in the policy instance set in which policies are valid and have intersecting scopes of effect, based on the effectiveness indicator information; and
obtain the policy instance set conforming to the preset effectiveness relationship, based on the relationship among the effectiveness indicators;
wherein the preset effectiveness relationship comprises at least one of the following: effectiveness indicators conflicting, effectiveness indicators overlapping, or effectiveness indicator(s) being included.

15. The management apparatus according to claim 13, wherein in performing the execution relationship analysis on the policy instance set conforming to the preset effectiveness relationship to obtain the policy instance set in which execution elements satisfy a preset execution relationship, the analysis module is configured to:
determine a relationship among execution elements in the policy instance set conforming to the preset effectiveness relationship, based on the element instance knowledge; and
obtain the policy instance set in which execution elements satisfy the preset execution relationship, based on the relationship among the execution elements;
wherein the preset execution relationship comprises at least one of the following: execution elements conflicting, execution elements overlapping, or execution elements being correlated.

16. The management apparatus according to claim 10, wherein the optimization module is specifically configured to perform automatic or manual optimization processing on the at least one target policy instance and the existing policy instance, based on the policy relationship analysis result.

17. The management apparatus according to claim 16, wherein in performing automatic optimization processing on the at least one target policy instance and the existing policy instance based on the policy relationship analysis result, the optimization module is configured to perform at least one of the following:
removing and/or deactivating an invalid policy instance(s);
removing and/or deactivating a redundant policy instance(s); or
removing and/or deactivating a low-priority policy instance(s) based on a priority policy.

18. The management apparatus according to claim 10, wherein the optimization module is further configured to update the policy application knowledge based on the policy relationship analysis result.

19. An electronic device, comprising: a processor and a memory for storing a computer program executable by the processor, wherein the processor, when executing the computer program, is configured to perform the steps of the method according to any one of claims 1 to 9.

20. A computer storage medium having a computer program stored thereon, wherein the computer program, when executed by a processor, implements the steps of the method according to any one of claims 1 to 9.
